# NOUVEAU FASCICULE DE BREVET EUROPEEN

(11) **EP 1 329 008 B2**
(45) Date de publication et mention de la décision concernant l'opposition: **15.01.2014**
(45) Mention de la délivrance du brevet: 08.12.2010
(21) Numéro de dépôt: 01978538.5
(22) Date de dépôt: 16.10.2001
(51) Int. Cl.: H02G 5/06, H02B 5/00

(54) **POSTE HAUTE TENSION HYBRIDE A DEPARTS OPPOSES EN VIS A VIS, ET MODULES BLINDES DE COUPURE ET D'AIGUILLAGE POUR UN TEL POSTE**
HYBRID-HOCHSPANNUNGSSTATION MIT GEGENÜBERLIEGENDEN ABGANGEN, UND GEKAPSELTEN SCHALT- UNDTRENNMODULEN DAFÜR
HIGH VOLTAGE HYBRID STATION WITH OPPOSITE BUSBARS AND SHIELDED CUTOFF AND SWITCHING MODULES

(30) Priorité: 20.10.2000 FR 0013479
(43) Date de publication de la demande: 23.07.2003
(73) Titulaire: ALSTOM Grid SAS, 92907 Paris la Défense Cédex (FR)
(72) Inventeur: MARMONIER, Jean, F-34130 Saint Aunis (FR); AUDREN, Jean-Paul, F-73100 Saint Offenge-dessous (FR)
(74) Mandataire: Ahner, Philippe
(86) Numéro de dépôt international: PCT/FR2001/003195
(87) Numéro de publication internationale: WO 2002/035671

(56) Documents cités:
- WO-A1-00/45486
- DE-A1- 2 929 054
- DE-U1- 29 700 930
- FR-A- 2 695 762
- GB-A- 2 331 412
- US-A- 3 903 387
- US-A- 5 436 797
- US-A- 5 841 629

## Description

L'invention a pour objet un poste de distribution haute tension hybride, c'est à dire comprenant des jeux de barres et des départs de technologie à isolation dans l'air, ainsi que des modules blindés de coupure et d'aiguillage comportant des appareils de coupure et de déconnexion sous enveloppe métallique, les modules servant à interconnecter les jeux de barres et les départs.

FR 2695762 concerne un poste d'alimentation modulaire sous enveloppe métallique comportant un jeu de barres principal reliant au moins deux paires de composants, tels que des traversées aériennes ou des boîtes à câbles, selon une configuration de poste en H. Les composants sont reliés par paire par un agencement rectiligne d'appareillages électriques sous enveloppes métalliques, parallèle et relié au jeu de barres principal. Les agencements d'appareillages électriques sont alignés.

En préambule, le concept de poste haute tension hybride mérite d'être approfondi car relativement récent. On désigne par AIS (Air Insulated System) la technologie à isolation dans l'air, et par GIS (Gas Insulated System) la technologie sous enveloppe métallique. Le but principal recherché est la réduction de la surface au sol des postes conventionnels (c'est à dire entièrement AIS), tout en conservant à la fois les avantages de la technologie AIS en terme de coût et de facilité de remplacement d'un composant et les avantages de la technologie GIS en terme d'encombrement et de comportement vis à vis de la pollution. Les postes hybrides peuvent être installés comme nouvelle implantation, mais aussi comme extension d'un poste conventionnel dont l'espace disponible restant pour une extension est limité.

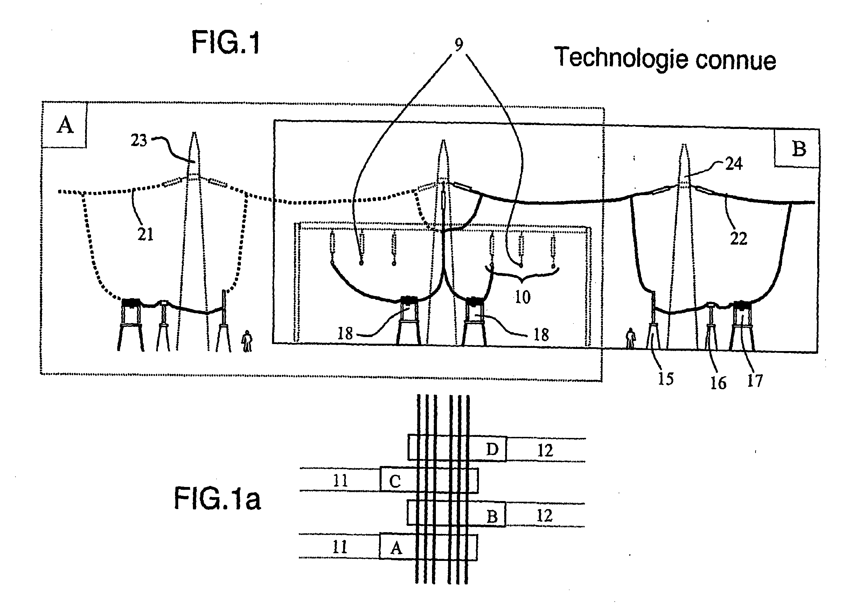

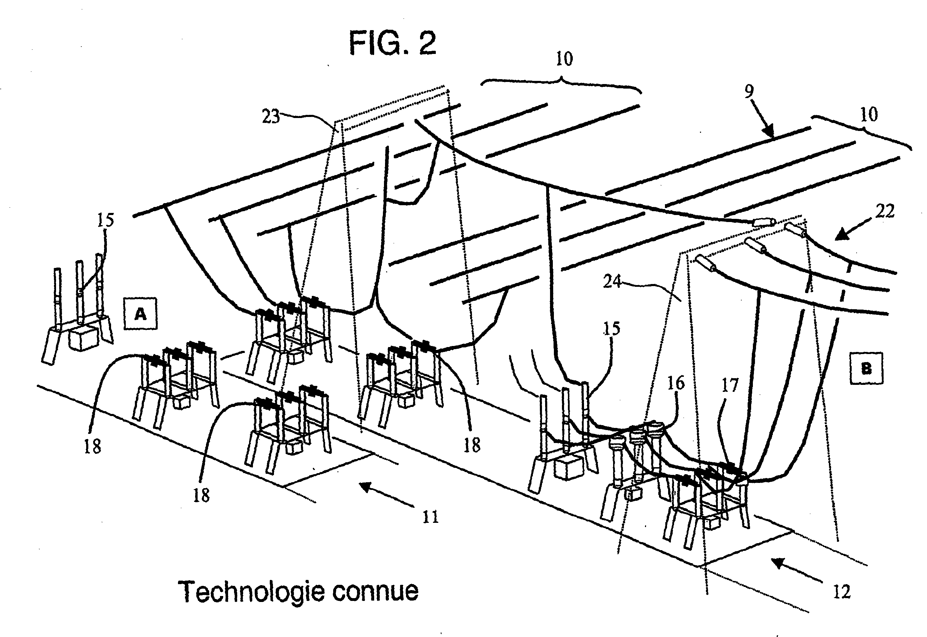

Un poste conventionnel à double jeu de barres et départs opposés est représenté aux figures 1, 1a et 2. Ce type de poste occupe un espace au sol important d'une part dans la direction des travées des départs (i.e en largeur), d'autre part dans la direction des jeux de barres (i.e en profondeur) du fait que les départs doivent être opposés en travées décalées. Les appareils d'aiguillage d'un même départ doivent en effet être disposés sous les deux jeux de barres.

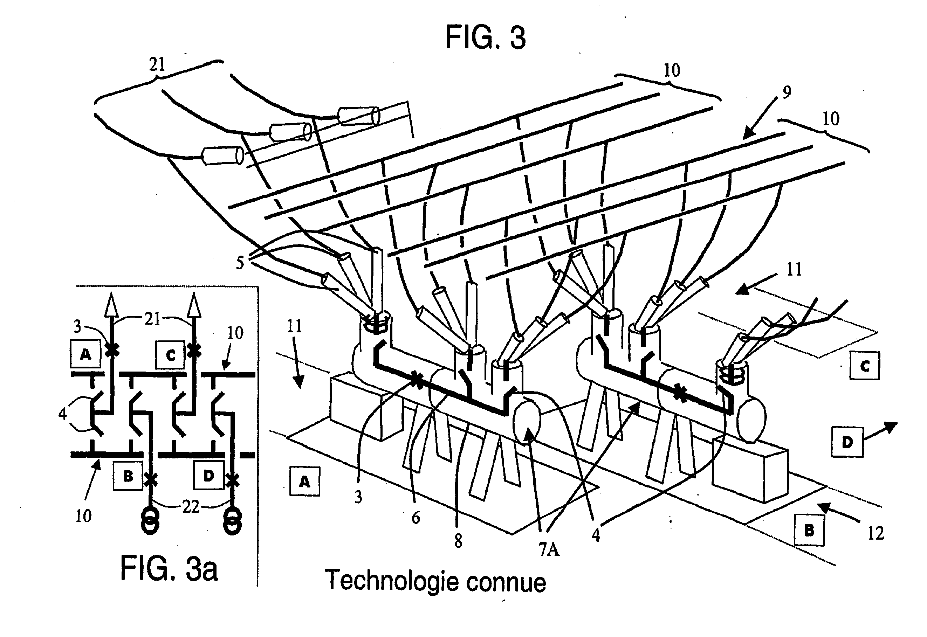

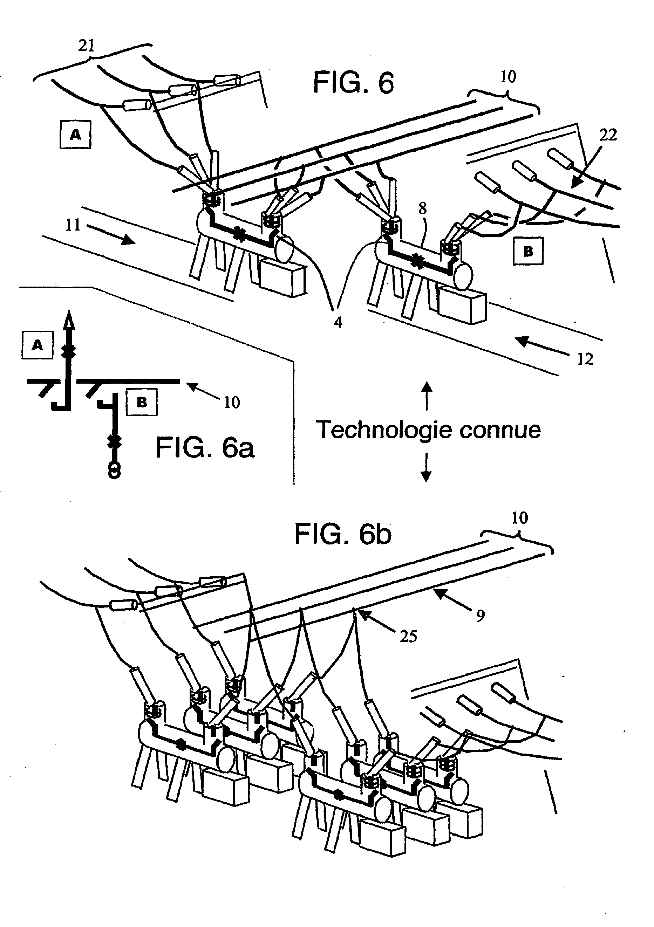

Afin notamment de réduire l'encombrement en largeur des postes conventionnels, des postes haute tension hybrides tels que ceux représentés schématiquement aux figures 3 et 6 ont été développés avec des modules blindés de coupure et d'aiguillage servant à interconnecter les jeux de barres et les départs. De tels modules blindés sont connus, notamment par la demande PCT WO 00/24100 dans laquelle les figures 1 et 2 montrent des modules monophasés pour simple et double jeux de barres. Dans cette technologie, chaque départ est associé à un module qui lui est propre, chaque module servant à relier un ou deux jeux de barres à un départ. Ainsi, deux départs opposés utilisent deux modules, nécessairement disposés dans deux travées décalées lorsque le poste comprend plus d'un jeu de barres. Par rapport à un poste conventionnel, ce type de poste hybride permet une réduction de la largeur des départs, et donc de la largeur du poste, mais ne permet pas une augmentation sensible du nombre de travées pouvant être installées dans un espace donné. En outre, cette technologie ne permet pas de relier directement entre eux deux départs opposés lorsqu'un module doit être déconnecté d'un jeu de barres suite à un incident sur ce dernier. Le document WO 00/45486 décrit un poste conforme au préambule de la revendication 1. Le document US 3 603 387 décrit un module conforme au préambule de la revendication 6.

La demanderesse a quant à elle conçu un nouveau type de module blindé pour réaliser des postes hybrides à départs opposés en vis à vis, permettant une réduction du coût de fabrication ainsi qu'une augmentation sensible du nombre de travées pouvant être installées dans un espace donné par rapport aux postes existants. Un poste hybride selon l'invention permet en outre de réaliser si nécessaire une fonction de connexion électrique entre deux départs opposés.

A cet effet, l'invention a pour objet un poste de distribution polyphasé haute tension dit hybride présentant les caracteristiques de la revendication 1.

Un module polyphasé unique relie électriquement deux départs opposés. Par exemple, pour un poste triphasé, deux départs opposés sont reliés par un module triphasé traversé par trois conducteurs de phase contenus dans l'enveloppe métallique dudit module et reliés chacun à une traversée aérienne à chaque extrémité du module.

Dans un mode de réalisation selon l'invention, deux départs opposés d'un poste transportant un nombre n de phases de courant sont reliés par n modules monophasés. Par exemple, pour un poste triphasé, deux départs opposés sont reliés par trois modules monophasés chacun traversé par un conducteur de phase unique relié à une traversée aérienne à chaque extrémité.

Pour un poste à au moins deux jeux de barres, les jeux de barres sont généralement parallèles entre eux et perpendiculaires aux travées.

La réalisation à un seul sectionneur d'arrivée est particulièrement destinée à l'installation du module dans un poste à simple jeu de barres où le sectionneur d'arrivée est généralement appelé sectionneur de jeu de barres.

A titre d'illustration, le poste comporte deux jeux de barres, et un module de coupure et d'aiguillage comporte deux sectionneurs d'arrivée reliés entre eux par un sectionneur de séparation en série avec le conducteur de phase.

L'invention a également pour objet un module de coupure et d'aiguillage conforme à la revendication 6. Ce type de module selon l'invention est notamment destiné à des postes hybrides à simple jeu de barres ainsi qu'à des postes hybrides dits en H. Le sectionneur d'arrivée d'un module selon l'invention est généralement appelé sectionneur de jeu de barres. Dans la plupart des applications, il débouche sur une traversée aérienne, mais il est aussi possible de le faire déboucher sur une boite à câbles gainés ou sur une ligne blindée sans sortir du cadre de l'invention.

Dans un mode de réalisation selon l'invention, l'enceinte d'un module renferme pour toute phase de courant un second sectionneur d'arrivée disposé entre les premier et second disjoncteurs. Cette réalisation est particulièrement destinée à l'installation du module dans un poste à double jeu de barres où les deux sectionneurs d'arrivée sont généralement appelés sectionneurs d'aiguillage. Dans une première réalisation d'un module, les deux sectionneurs d'arrivée sont directement reliés entre eux par le conducteur de phase. Dans une seconde réalisation, un sectionneur de séparation en série avec le conducteur de phase relie les deux sectionneurs d'arrivée, afin de pouvoir isoler entre elles les deux moitiés symétriques du module. Le double jeu de barres du poste selon l'invention peut être entièrement à isolation dans l'air (AIS), ou encore mixte AIS/GIS avec un premier jeu de barres dans l'air et un second sous enveloppe métallique.

Dans une réalisation d'un module pour poste hybride, en particulier destinée à un poste de type "un disjoncteur et demi", deux départs et deux jeux de barres sont interconnectés par un module comprenant trois disjoncteurs en série, un disjoncteur étant disposé entre les deux sectionneurs d'arrivée qui sont utilisés comme sectionneurs de sortie vers les départs de lignes. D'autres postes de type "un disjoncteur et demi" peuvent être réalisés en associant un module à deux disjoncteurs selon l'invention avec un module classique à un seul disjoncteur.

En option, au moins un système de coupure ou de déconnexion d'un module selon l'invention est disposé dans un compartiment qui lui est propre dans l'enceinte du module, ledit compartiment étant isolé de façon étanche des compartiments adjacents.

En option, un module selon l'invention comprend au moins un transformateur de courant disposé entre un sectionneur d'extrémité et une traversée aérienne, et/ou entre un sectionneur d'arrivée et un disjoncteur.

L'invention, ses caractéristiques et ses avantages sont précisés dans la description qui suit en rapport avec les figures ci dessous.
La figure 1 est une représentation d'un poste conventionnel à double jeu de barres et départs opposés.
La figure la est un schéma de principe du décalage des départs d'un poste conventionnel tel que représenté à la figure 1.
La figure 2 est une représentation en perspective d'un poste conventionnel tel que représenté à la figure 1.
La figure 3 est une représentation en perspective d'un poste hybride à double jeu de barres de technologie connue, où les départs sont opposés en travées décalées.
La figure 3a est un schéma électrique de principe d'un poste tel que représenté à la figure 3.
La figure 4 est une représentation en perspective d'un poste hybride à double jeu de barres selon l'invention, avec un module en version triphasée.
La figure 4a est un schéma électrique de principe d'un poste tel que représenté à la figure 4.
La figure 5 est une représentation partielle d'une variante d'un module pour poste hybride à double jeu de barres tel que représenté à la figure 4 qui ne tombe pas dans le cadre de l'invention.
La figure 5a est un schéma électrique de principe d'un poste utilisant un module tel que représenté à la figure 5.
La figure 5b est une représentation en perspective d'un poste hybride à double jeu de barres selon l'invention équivalent à celui représenté à la figure 4, avec trois modules individuels en version monophasée.
La figure 6 est une représentation en perspective d'un poste hybride à simple jeu de barres de technologie connue, où les départs sont opposés en travées décalées.
La figure 6a est un schéma électrique de principe d'un poste tel que représenté à la figure 6.
La figure 6b est une représentation en perspective d'un poste hybride classique à simple jeu de barres équivalent à celui représenté à la figure 6, avec trois modules individuels en version monophasée.
La figure 7 est une représentation en perspective d'un poste hybride à simple jeu de barres selon l'invention.
La figure 7a est un schéma électrique de principe d'un poste tel que représenté à la figure 7.
La figure 8 représente en perspective un poste hybride selon l'invention pour une architecture dite en H.
La figure 8a est un schéma électrique de principe d'un poste hybride en H selon l'invention.
La figure 9 représente en perspective un poste hybride classique pour une architecture dite "un disjoncteur et demi"
La figure 10 représente en perspective un poste hybride selon l'invention pour une architecture "un disjoncteur et demi".
La figure 10a est un schéma électrique de principe d'un poste hybride de type "un disjoncteur et demi" selon l'invention.
La figure 11 représente en perspective une variante du module pour un poste hybride de type "un disjoncteur et demi" tel que représenté à la figure 10.
La figure 12 représente en perspective un poste hybride selon l'invention pour une architecture "un disjoncteur et demi", utilisant un module associé à un module classique.
La figure 13 représente en perspective un poste hybride selon l'invention à double jeu de barres mixte AIS/GIS.
La figure 14 représente pour une phase de courant une variante de module pour poste à double jeu de barres, où les sectionneurs d'aiguillage sont disposés en parallèle.

En figure 1, le poste conventionnel de technologie à isolation dans l'air (AIS) est équipé d'un double jeu de barres 10 et de deux sectionneurs d'aiguillage 18 pour toute phase de courant d'une travée 11 ou 12, chaque sectionneur d'aiguillage pouvant connecter une phase d'un départ A ou B à la même phase d'un jeu de barres 10 transportée par une barre 9. Un départ comprend typiquement en série des équipements AIS tels qu'un disjoncteur 15, un transformateur de courant 16, et un sectionneur de mise à la terre de ligne 17. Les sectionneurs d'aiguillage 18 d'un même départ doivent être disposés sous les deux jeux de barres 10, comme représenté également à la figure 2, et occupent au sol approximativement la largeur du double jeu de barres. Ceci implique que deux départs A ou B opposés ne peuvent être en vis à vis, et donc que les travées 11 et 12 qu'ils occupent doivent être en décalées en profondeur, dans la direction des jeux de barres. Un départ A ou B aboutit à une ligne électrique 21 ou 22 dans le prolongement de sa travée 11 ou 12, les lignes étant généralement supportées par des portiques 23 et 24 surmontant les départs.

La figure 1a schématise le décalage en profondeur des travées 11 et 12 pour des départs opposés A,B,C,D.

Figure 2, la représentation en perspective d'un poste conventionnel permet de mieux comprendre le décalage en profondeur des travées 11 et 12.

En figure 3 est représenté schématiquement en perspective un poste hybride à double jeu de barres de technologie connue, chaque départ A ou B étant associé à un module 7A qui lui est propre. Ces modules 7A sont connus, notamment par la demande PCT WO 00/24100, et sont représentés sur la figure en version triphasée, trois conducteurs de phase 6 étant contenus dans l'enveloppe métallique 8 d'un module. Par souci de simplification, un seul conducteur 6 est représenté. L'enveloppe 8 contient par phase un système de coupure ou disjoncteur 3 ainsi que trois systèmes de déconnexion ou sectionneurs 4 débouchant chacun sur une traversée aérienne 5. Un premier sectionneur dit sectionneur de ligne est relié à une ligne électrique 21 ou 22 d'un départ A ou B, les deux autres sectionneurs dits sectionneurs d'aiguillage étant reliés aux barres 9 d'un double jeu de barres 10. Chaque module sert à relier l'un ou l'autre des deux jeux de barres 10 à un départ. Ainsi, deux départs opposés tels que A et B ou C et D utilisent deux modules nécessairement disposés dans deux travées 11 et 12 décalées en profondeur. Cette architecture à deux modules par départs opposés permet notamment de continuer à alimenter un départ même si le module affecté au départ opposé est hors service. Toutefois, elle ne permet pas de relier directement entre eux deux départs opposés, lorsqu'un module doit être déconnecté d'un jeu de barres suite à un incident sur ce dernier.

La figure 3a est un schéma électrique du poste hybride représenté à la figure 3. Les départs B et D sont ici supposés alimenter des transformateurs de puissance sur des lignes 22. Les sectionneurs de ligne sont fermés et ne sont pas représentés, les sectionneurs d'aiguillage étant quant à eux représentés entre les deux jeux de barres 10. Il apparaît que deux départs opposés tels que A et B ou C et D ne peuvent être directement reliés entre eux. Toutefois, par un agencement de fermeture des sectionneurs d'aiguillage, il est possible d'alimenter l'un ou l'autre des deux jeux de barres 10 par un départ tel que A ou C sous tension, afin d'alimenter les départs B ou D de l'autre côté des jeux de barres. Il va de soi que cette connexion indirecte de départs opposés ne peut être effectuée si les jeux de barres sont indisponibles.

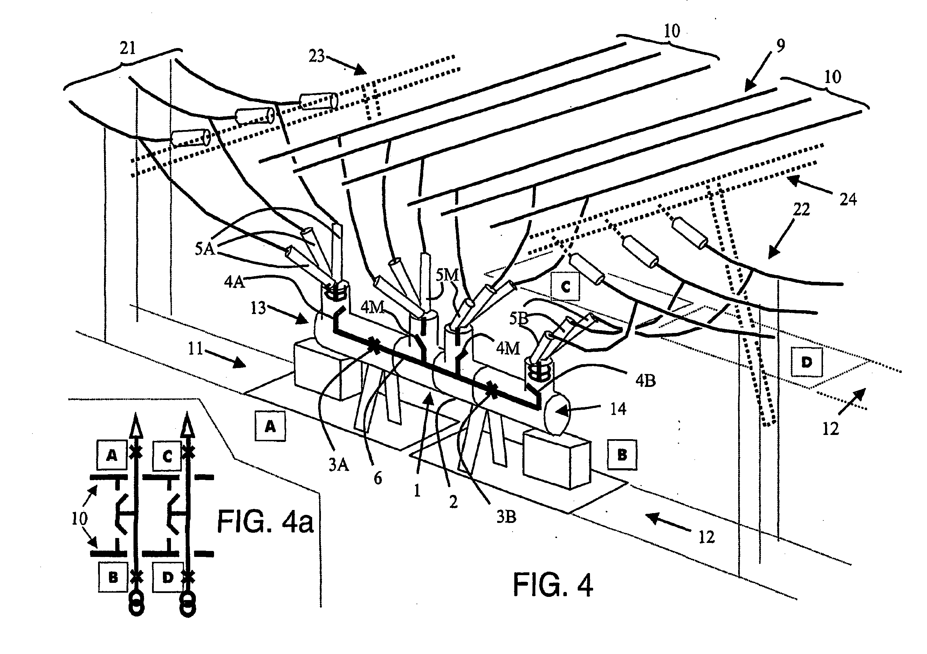

Figure 4, un poste hybride à double jeu de barres selon l'invention est représenté en perspective, avec un seul module 1 en version triphasée reliant deux départs opposés tels que A et B ou C et D. Deux départs opposés forment des travées 11 et 12 alignées, sensiblement perpendiculaires au deux jeux de barres 10. Les travées de départs opposés successifs sont sensiblement parallèles entre elles et en vis à vis, et occupent ainsi en profondeur un espace approximativement réduit de moitié par rapport à un même nombre de départs dans un poste hybride classique tel que représenté à la figure 3. De même que dans un poste conventionnel AIS ou un poste hybride classique, un départ A ou B est relié à une ligne électrique 21 ou 22 dans le prolongement de sa travée 11 ou 12, et les lignes 21 et 22 sont supportées en général par des portiques 23 et 24 surmontant les départs. Du fait que les départs opposés A et B sont en vis à vis, le poste hybride selon l'invention présente des lignes 21 et 22 alignées.

Le module 1 représenté comprend trois conducteurs de phase 6 contenus dans l'enveloppe métallique 2. Par souci de simplification, un seul conducteur 6 est représenté de même qu'à la figure 3. De même que pour des modules de postes hybrides classiques, un module pour poste hybride selon l'invention est en premier lieu formé d'une enveloppe métallique généralement tubulaire comportant à chacune de ses deux extrémités 13 et 14 un sectionneur d'extrémité 4A ou 4B débouchant sur autant de traversées aériennes 5A ou 5B que de phases de courant traversant le module.

Une particularité de l'invention est que les traversées aériennes 5A ou 5B de chacune des extrémités d'un module sont toutes reliées à une ligne 21 ou 22 de départs opposés tels que A et B, par exemple par l'intermédiaire de câbles.

Dans le poste à double jeu de barres représenté à la figure 4, un module 1 comporte par phase deux disjoncteurs 3A et 3B reliés en série par un conducteur de phase 6, ainsi que deux sectionneurs d'arrivée 4M encore appelés sectionneurs d'aiguillage. Les deux sectionneurs d'aiguillage 4M permettent en effet d'aiguiller la charge de l'un et/ou l'autre des deux jeux de barres sur l'un et/ou l'autre des deux départs opposés, et réciproquement. Chaque sectionneur d'aiguillage est raccordé à une dérivation du conducteur de phase 6 située entre les deux disjoncteurs 3A et 3B, et est relié à un jeu de barres 10 par une traversée aérienne 5M.

Le schéma de poste à double jeu de barres apporte un avantage en terme de disponibilité de fourniture par rapport au schéma à simple jeu de barres. En effet, en cas d'indisponibilité d'un jeu de barres, le sectionneur d'aiguillage 4M raccordé à ce dernier est ouvert tandis que son voisin raccordé au jeu de barres disponible est fermé. L'un et/ou l'autre des départs opposés peut alors à nouveau être alimenté par le jeu de barres disponible.

Dans un mode préféré de réalisation, chaque sectionneur d'aiguillage est compris dans un compartiment isolé de façon étanche des autres compartiments dans l'enceinte du module, et les deux sectionneurs d'aiguillage adjacents 4M sont séparés par une cloison étanche constituée de façon classique par un cône en matière électriquement isolante. Cette réalisation présente l'avantage de conserver la disponibilité d'un jeu de barres en cas de défaut dans le compartiment du sectionneur d'aiguillage connecté à l'autre jeu de barres. En effet, le compartimentage des sectionneurs d'aiguillage permet qu'un défaut sur un sectionneur dans un premier compartiment ne se propage pas jusqu'à l'autre sectionneur situé dans un second compartiment adjacent isolé. La tenue à la tension du sectionneur d'aiguillage ouvert situé dans le compartiment sain n'est donc pas affectée, et le jeu de barres relié à ce second compartiment peut ainsi être maintenu sous tension sans nécessiter la déconnexion des cables le reliant au module. Seul le jeu de barres relié au premier compartiment endommagé devra être mis hors service.

En outre, dans un poste hybride selon l'invention, un départ peut dans un mode de fonctionnement dégradé être alimenté par la ligne du départ opposé même en cas d'indisponibilité des deux jeux de barres. En effet, un module selon l'invention permet de réaliser une fonction de connexion électrique entre deux départ opposés lorsque les deux disjoncteurs 3A et 3B ainsi que les deux sectionneurs d'extrémités 4A et 4B dudit module sont fermés.

La figure 4a est un schéma électrique de principe du poste représenté à la figure 4. De même qu'à la figure 3a, les sectionneurs de ligne sont supposés fermés et seuls les sectionneurs d'aiguillage sont représentés. Il apparaît clairement que deux lignes opposées peuvent être directement reliées phase à phase par les conducteurs de phase d'un module, lorsque les disjoncteurs ainsi que les sectionneurs de ligne du module sont fermés. En comparaison avec la figure 3A, il est clair que les départs opposés occupent un espace réduit environ de moitié.

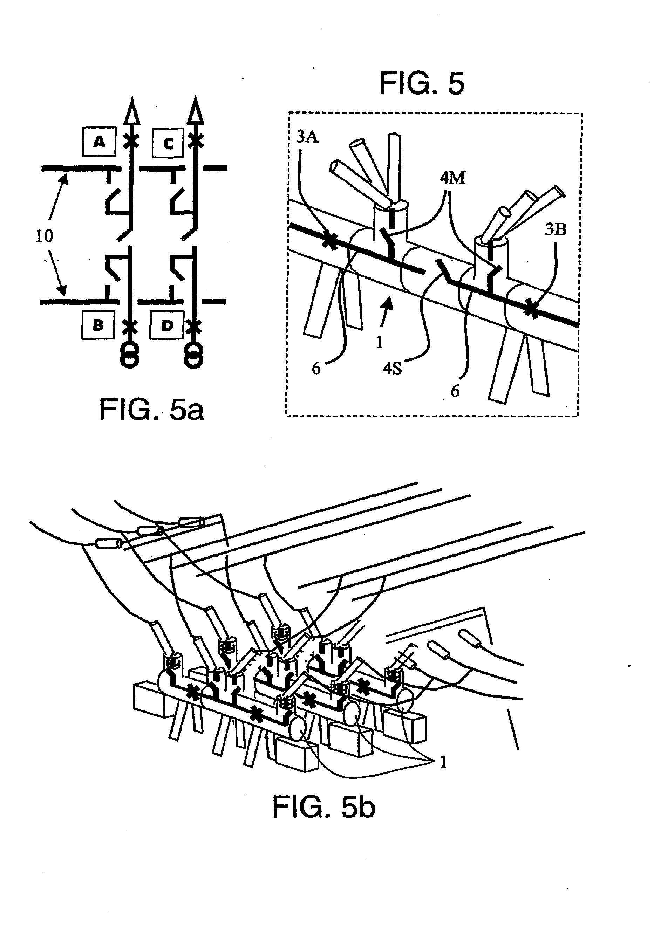

En figure 5 est représentée schématiquement une variante du module 1 de la figure 4, où un sectionneur de séparation 4S en série avec le conducteur de phase 6 relie pour toute phase de courant les deux sectionneurs d'aiguillage 4M. L'ouverture du sectionneur de séparation 4S permet que chaque départ puisse être aiguillé sur le jeu de barres du même côté, indépendamment du départ opposé. Par ailleurs la maintenance d'une moitié du module, par exemple au niveau du disjoncteur 3B ou du sectionneur 4B, peut être effectuée en conservant l'autre moitié du module (disjoncteur 3A et sectionneur 4A) en service, à condition qu'un dispositif de mise à la terre provisoire ou permanent, non représenté sur la figure, soit installé. Avantageusement, les sectionneurs d'aiguillage peuvent être compartimentés pour permettre en cas de défaut dans un compartiment de vidanger ce dernier du gaz diélectrique et de maintenir ouvert le sectionneur de séparation dans son compartiment isolé, sans affecter le fonctionnement des appareils situés dans la moitié saine du module.

La variante à sectionneur de séparation apporte donc une souplesse d'exploitation accrue. On peut noter que la souplesse d'exploitation n'est toutefois pas totale, contrairement au poste classique représenté à la figure 3, puisque chaque départ ne peut être aiguillé de façon indépendante sur le jeu de barres du côté opposé.

La figure 5a est un schéma électrique de principe du poste représenté à la figure 4, mais intégrant dans un module 1 un sectionneur de séparation par phase comme représenté à la figure 5. Lorsque les sectionneurs de séparation sont ouverts, le poste fonctionne comme deux postes indépendants symétriques.

Figure 5b, un poste hybride à double jeu de barres selon l'invention est représenté en perspective, avec trois modules individuels 1 en version monophasée reliant deux départs opposés tels que A et B ou C et D. Ce poste est fonctionnellement équivalent à celui représenté à la figure 4, et procure des avantages en matière d'isolation de défaut et de maintenance. L'encombrement en profondeur peut toutefois être légèrement supérieur à un module triphasé, de par le volume de chaque module individuel.

La figure 6 est une représentation en perspective d'un poste hybride à simple jeu de barres de technologie connue, où les départs A et B sont opposés en travées 11 et 12 légèrement décalées. Ce poste utilise par départ un module triphasé comprenant par phase un disjoncteur 3 relié à chaque extrémité du module à un sectionneur 4. Les modules de départs opposés sont ici disposés dans des travées décalées, mais il est possible de les placer en vis à vis de même qu'à la figure 6b.

La figure 6a est un schéma électrique de principe du poste à simple jeu de barres représenté figure 6, où les départs opposés A et B sont décalés. Il est toutefois possible pour les postes hybrides classiques à simple jeu de barres de disposer en vis à vis les modules de départs opposés.

La figure 6b est une représentation en perspective d'un poste hybride classique à simple jeu de barres équivalent à celui représenté à la figure 6, avec par départ trois modules individuels en version monophasée. Les modules de départs opposés sont ici disposés en vis à vis, les sectionneurs de jeu de barres de deux modules opposés étant affectés à une même phase et reliés par l'intermédiaire de câbles à une barre 9 transportant cette phase, les câbles étant raccordés à la barre en un même point de connexion 25. Ce type de poste ne permet pas de relier directement deux départs en cas d'indisponibilité du jeu de barres, sauf à déconnecter les câbles raccordés à un point de connexion 25 et relier directement entre eux les sectionneurs de jeu de barres opposés, ce qui implique une intervention délicate.

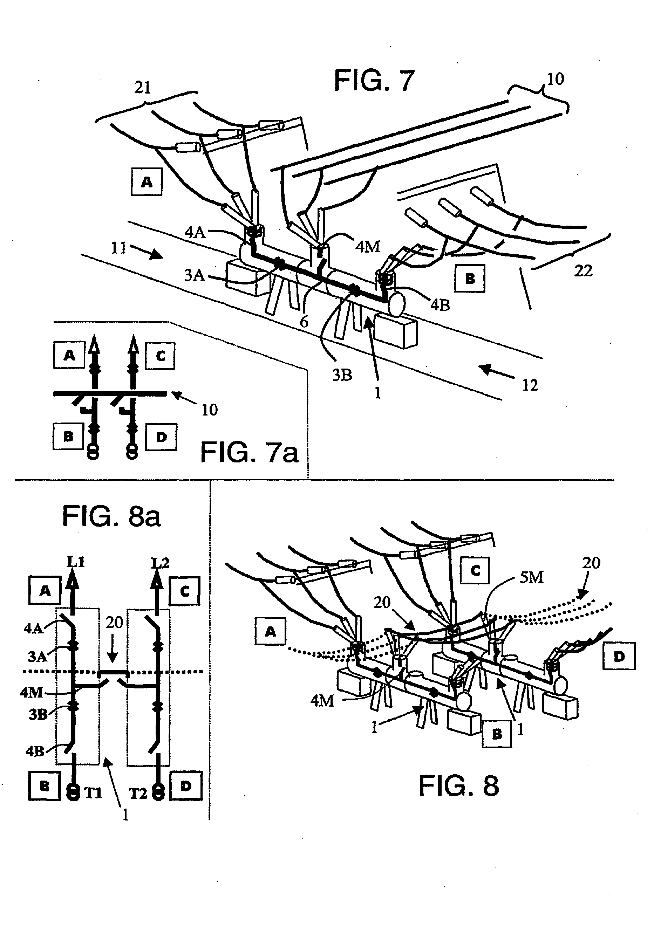

En figure 7 est représenté en perspective un poste hybride à simple jeu de barres 10 selon l'invention, où deux départs opposés A et B sont reliés par un seul module 1 ici triphasé et forment des travées 11 et 12 alignées. De même que pour un poste à double jeu de barres, le module 1 comprend par phase deux disjoncteurs 3A et 3B en série disposés entre deux sectionneurs d'extrémité 4A et 4B chacun relié à un départ A ou B. Du fait du simple jeu de barres, le module 1 comprend ici par phase un seul sectionneur d'arrivée 4M aussi appelé sectionneur de jeu de barres, qui relie le jeu de barres 10 à un point du conducteur de phase 6 entre les deux disjoncteurs. Lorsque le sectionneur de jeu de barres 4M est ouvert, il est possible de relier directement deux départs opposés en cas d'indisponibilité du jeu de barres. Le schéma électrique de principe de ce poste est représenté à la figure 7a.

La figure 8 représente en perspective un poste hybride selon l'invention pour une architecture dite en H, dont un schéma électrique classique est représenté à la figure 8a. Les modules 1 utilisés dans ce poste en H, ainsi que la disposition des départs opposés tels que A et B ou C et D, sont similaires à la configuration pour un poste hybride à simple jeu de barres selon l'invention. Les sectionneurs d'arrivée 4M ou sectionneurs de jeu de barres de deux modules côte à côte sont reliés par des câbles de jeu de barres 20 pouvant être déconnectés manuellement des traversées aériennes 5M qui les supportent. Lorsque tous les câbles de jeu de barres 20 sont connectés, ainsi que représenté en pointillés sur la figure, la connexion électrique est équivalente à celle d'un simple jeu de barres. L'architecture en H revient à considérer en particulier deux paires de départs opposés dans le poste, chaque paire étant ici reliée par un module 1, avec des câbles de jeu de barres 20 connectés entre les sectionneurs d'arrivée 4M des deux modules. L'ensemble considéré présente la forme d'un H, ainsi que est représenté à la figure 8a.
De façon connue, une ligne L1 ou L2 d'un poste en H est toujours associée à un transformateur de puissance tel que T1 ou T2. Les sectionneurs d'arrivée 4M sont ouverts en fonctionnement normal. Si un défaut survient par exemple sur la ligne L1, le disjoncteur 3A et le sectionneur 4A en extrémité du module relié à L1 sont ouverts de façon à isoler les parties amont et aval de la ligne. Le disjoncteur 3B et le sectionneur 4B sont fermés en aval, et les sectionneurs d'arrivée 4M sont aussi fermés de telle sorte que le transformateur T1 devient alimenté par la ligne L2 en même temps que le transformateur T2. D'autres modes de fonctionnement connus et non détaillés dans la présente existent pour les postes en H. Il est entendu que l'invention ne porte pas sur l'architecture en H en elle même, mais sur un poste hybride en H utilisant un module 1 particulier.

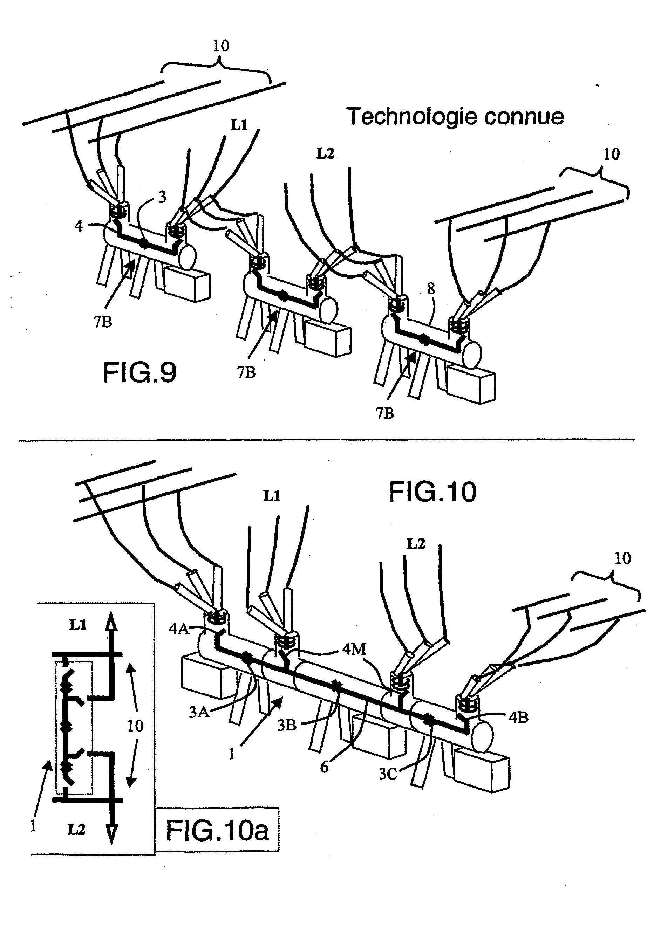

En figure 9 est représenté en perspective un poste hybride classique pour une architecture dite "un disjoncteur et demi". Deux départs de lignes L1 et L2 et deux jeux de barres 10 sont interconnectés par trois modules blindés 7B connus disposés en alignement et reliés électriquement en série, chaque module 7B étant constitué d'un disjoncteur 3 contenu dans une enceinte métallique comprenant à chaque extrémité et pour chaque phase de courant un sectionneur 4 relié à une traversée aérienne. Deux modules adjacents sont reliés en série par des câbles joignant leurs traversées aériennes et reliés en outre à un départ de ligne L1 ou L2. Le principe de fonctionnement d'un poste "un disjoncteur et demi" peut être résumé comme suit: En situation normale, tous les disjoncteurs sont fermés.
En cas de défaut sur un jeu de barres, celui-ci peut être isolé sans perdre l'alimentation des départs de lignes qui est assurée par le jeu de barres sain, le courant transitant par deux des trois disjoncteurs.

En figure 10 est représenté en perspective un poste hybride selon l'invention pour une architecture "un disjoncteur et demi", utilisant un seul module 1 de coupure et d'aiguillage pour relier un jeu de barres 10 à deux départs de lignes L1 et L2. Le module 1 comporte pour toute phase de courant trois disjoncteurs 3A, 3B et 3C reliés en série par un conducteur de phase 6. Deux sectionneurs d'arrivée 4M sont disposés chacun entre deux disjoncteurs adjacents et sont utilisés dans cette architecture "un disjoncteur et demi" comme sectionneurs de sortie vers les départs de lignes L1 et L2.

La figure 10a est un schéma électrique de principe du poste "un disjoncteur et demi" représenté figure 10.

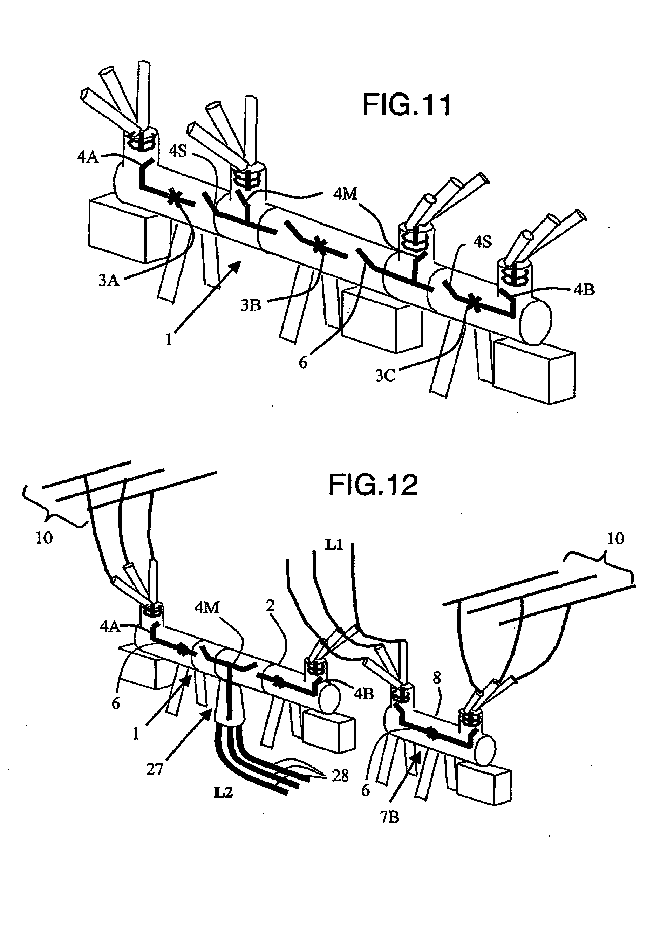

En figure 11, le module 1 représenté figure 10 peut se voir ajouter pour toute phase de courant des sectionneurs 4S en série avec le conducteur de phase 6 de façon à pouvoir isoler chaque disjoncteur 3A, 3B ou 3C de ses voisins en ouvrant un ou deux sectionneurs 4S.

Il est aussi possible de réaliser un poste hybride selon l'invention pour une architecture "un disjoncteur et demi" en utilisant un module 1 à deux disjoncteurs selon l'invention associé à un module classique mono disjoncteur 7B. Le module 1 est du type de celui utilisé dans un poste hybride à simple jeu de barres selon l'invention, le sectionneur d'arrivée 4M étant ici relié à un départ de ligne quel qu'il soit (à isolation dans l'air, sous enveloppe métallique, à câbles gainés, ou autre).

En figure 12 est représenté en perspective un tel poste hybride avec un module 1 dont le sectionneur d'arrivée 4M est un système de déconnexion relié à un départ de ligne souterrain L2. Ce système de déconnexion 4M est constitué par phase de deux sectionneurs adjacents disposés en série avec le conducteur de phase 6 et formant avec ce dernier une dérivation en T aboutissant à une partie saillante 27 de l'enceinte 2. La partie saillante 27 est prévue pour raccorder chaque conducteur de phase 6 à un câble 28 isolé par une gaine, une boite à câbles pouvant être installée à l'extérieur de l'enceinte dans le prolongement de ladite partie. Un sectionneur d'extrémité 4A du module 1 est relié à un premier jeu de barres 10, l'autre sectionneur d'extrémité 4B étant relié à un départ de ligne L1 ainsi qu'à un premier sectionneur d'un module classique 7B dont le second sectionneur est relié à un second jeu de barres 10.

Les modules utilisés dans un poste hybride selon l'invention peuvent présenter divers types de raccordement à l'embouchure des sectionneurs, selon les types de jeux de barres et de départs dans le poste. Le poste hybride représenté en figure 4 comporte un double jeu de barres 10 à isolation dans l'air, et les sectionneurs d'arrivée 4M débouchent donc sur des traversées aériennes 5M. Un poste hybride à double jeu de barres selon l'invention peut aussi être réalisé de façon mixte AIS/GIS avec un premier jeu de barres dans l'air et un second sous enveloppe métallique, auquel cas un des deux sectionneurs d'arrivée 4M débouche sur un raccordement avec l'enveloppe métallique d'un jeu de barres blindé.

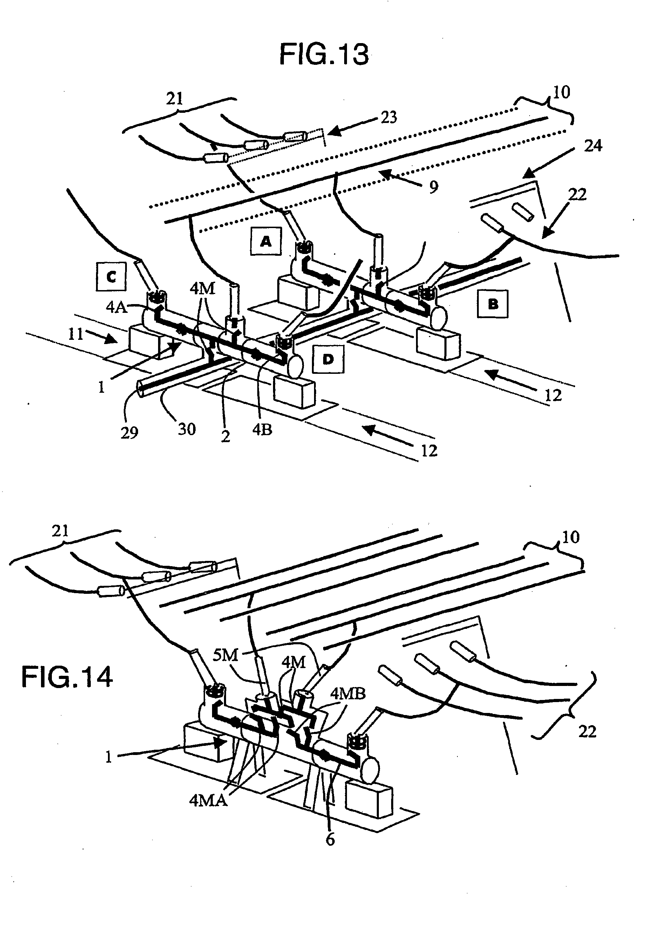

En figure 13 est représenté pour une phase de courant un tel poste à double jeu de barres mixte AIS/GIS en version monophasée, un module 1 monophasé reliant pour chaque phase deux départs opposés tels que A et B ou C et D. L'enceinte 2 d'un module est raccordée au niveau d'un sectionneur d'arrivée 4M à une enveloppe blindée 30 renfermant une barre 29 d'un jeu de barres blindé. Le volume de l'enveloppe 30 peut communiquer avec l'enceinte 2, ou être isolé de cette dernière par une cloison étanche à une extrémité du sectionneur d'arrivée 4M.

Les modules utilisés dans un poste hybride à double jeu de barres selon l'invention sont représentés dans les figures précédentes avec deux sectionneurs d'aiguillage 4M chacun constitué d'un seul élément sectionneur. L'invention couvre aussi une variante de réalisation de module où chaque sectionneur d'aiguillage 4M est un système de déconnexion constitué de deux éléments sectionneurs disposés en série avec le conducteur de phase dans l'enceinte d'un module et formant une dérivation électrique en T à l'embouchure du sectionneur d'arrivée. Cette réalisation s'applique d'abord à un poste à double jeu de barres à isolation dans l'air, mais peut aussi s'appliquer à un double jeu de barres mixte AIS/GIS dès lors qu'une dérivation en T est disposée pour déboucher sur un jeu de barres blindé.

En figure 14 est représentée pour une phase de courant une telle variante pour poste à double jeu de barres à isolation dans l'air, en version monophasée, où chaque sectionneur d'aiguillage 4M est constitué de deux éléments sectionneurs 4MA et 4MB formant une dérivation en T, les deux dérivations étant reliées en parallèle dans le module 1 et débouchant chacune sur une traversée aérienne 5M raccordant le module à la phase d'un des deux jeux de barres. Cette solution à sectionneurs d'aiguillage parallèles apporte une totale souplesse d'exploitation comme pour un poste hybride classique tel que représenté à la figure 3, puisque chaque départ peut être aiguillé de façon indépendante sur l'un ou l'autre des jeux de barres. En comparaison, les postes selon l'invention représentés aux figures 4 ou 5 ne permettent pas cette souplesse totale.

## Revendications

1. Poste de distribution polyphasé haute tension dit hybride à simple ou double jeu de barres avec au moins un jeu de barres (10) à isolation dans l'air, comprenant des départs (A, B, C, D) de lignes à isolation dans l'air (21,22) disposés en travées (11,12) sensiblement parallèles de chaque côté du ou des jeux de barres (10) et comportant des modules (1) blindés de coupure et d'aiguillage chacun formé par une enceinte (2) métallique renfermant pour toute phase de courant traversant un module des systèmes de coupure et de déconnexion reliés à un conducteur de phase (6) dans un gaz d'isolation, un système de déconnexion d'extrémité (4A, 4B), les départs sont opposés deux à deux en vis à vis, et deux départs (A, B) opposés formant des travées perpendiculaires à un jeu de barres (10) sont électriquement reliés pour toute phase de courant par un seul module (1) lorsque les systèmes de coupure (3A, 3B, 3C) et de déconnexion d'extrémités (4A, 4B) dudit module sont fermés, lesdits systèmes de déconnexion d'extrémité étant chacun reliés à un départ (A, B), chaque système de déconnexion d'extrémité dans une enceinte (2) d'un module (1) consiste pour toute phase de courant en un sectionneur d'extrémité (4A, 4B) débouchant sur une traversée aérienne (5A, 5B) électriquement reliée à un départ (A, B) du poste, et dans lequel lesdits sectionneurs d'extrémités (4A, 4B) sont disposés en série avec deux systèmes de coupure consistant en deux disjoncteurs (3A, 3B) reliés en série par le conducteur de phase (6) eux-mêmes disposés de part et d'autre d'un ou deux sectionneurs d'arrivée (4M) débouchant chacun sur une traversée aérienne (5M) électriquement reliée à une barre (9) d'un jeu de barres (10), **caracterisé en ce que** le système de déconnexion d'extrémité (4A, 4B) est disposé à chacune des deux extrémités d'un module deux départs opposés (A,B) forment des travées alignées et le ou chaque sectionneur d'arrivée est relié à une derivation du conducteur de phase et à la traversée aérienne (5M).

2. Poste de distribution polyphasé selon la revendication 1 dans lequel un module (1) polyphasé unique relie électriquement deux départs (A, B) opposés.

3. Poste de distribution polyphasé selon la revendication 1, transportant un nombre n de phases de courant, dans lequel deux départs (A, B) opposés sont reliés par n modules (1) monophasés.

4. Poste selon l'une des revendications 1 à 3, dans lequel le poste comporte deux jeux de barres (10) et dans lequel un module (1) de coupure et d'aiguillage comporte deux sectionneurs d'arrivée (4M) directement reliés entre eux par le conducteur de phase (6).

5. Poste selon l'une des revendications 1 à 3, dans lequel le poste comporte deux jeux de barres (10) et dans lequel un module (1) de coupure et d'aiguillage comporte deux sectionneurs d'arrivée (4M) reliés entre eux par un sectionneur de séparation (4S) en série avec le conducteur de phase (6).

6. Module de coupure et d'aiguillage formé par une enceinte (2) métallique renfermant dans un gaz d'isolation, pour toute phase de courant, un premier disjoncteur (3A) relié à un conducteur de phase (6) traversant ledit module, chacune des deux extrémités (13, 14) dudit module comportant par phase un sectionneur d'extrémité (4A, 4B) relié à une traversée aérienne (5A, 5B), un sectionneur d'arrivée (4M) étant disposé entre le premier disjoncteur (3A) et un sectionneur d'extrémité (4A, 4B), un second disjoncteur (3B) disposé en série avec le premier disjoncteur (3A) de telle sorte que le sectionneur d'arrivée (4M) se situe entre les premier et second disjoncteurs (3A, 3B), le sectionneur d' arrivée (4M) est relié d'une part à une dérivation de ce conducteur de phase (6) et d'autre part à une traversée aérienne (5M), **caracterisé en ce que** les deux disjoncteurs (3A, 3B) sont reliés directement par le conducteur de phase (6).

7. Module selon la revendication 6, dans lequel l'enceinte (2) renferme pour toute phase de courant un second sectionneur d'arrivée disposé entre les premier et second disjoncteurs (3A, 3B).

8. Module selon la revendication 7, dans lequel les deux sectionneurs d'arrivée (4M) sont directement reliés entre eux par le conducteur de phase (6).

9. Module selon l'une des revendications 6 à 8, dans lequel au moins un disjoncteur ou sectionneur est disposé dans un compartiment qui lui est propre dans l'enceinte (2) du module, ledit compartiment étant isolé de façon étanche des compartiments adjacents.

10. Module selon l'une des revendications 6 à 9, comprenant au moins un transformateur de courant (19) disposé entre un sectionneur d'extrémité (4A, 4B) et une traversée aérienne (5A, 5B).

## Patentansprüche

1. Mehrphasige, sogenannte hybride Hochspannungsverteileranlage mit einfachem bzw. zweifachem Sammelschienensatz mit zumindest einem luftisolierten Sammelschienensatz (10), enthaltend Abgänge (A, B, C, D) von luftisolierten Leitungen (21, 22), die in Schaltfeldern (11, 12) angeordnet sind, welche auf jeder Seite des bzw. der Sammelschienensätze (10) im wesentlichen parallel verlaufen, und gekapselte Trenn- und Schaltmodule (1) aufweisen, die jeweils aus einem Metallgehäuse (2) bestehen, das für jegliche durch ein Modul geleitete Stromphase Trenn- und Abschalteinrichtungen umschließt, die mit einem Phasenleiter (6) in einem Isoliergas verbunden sind, sowie eine Endabschalteinrichtung (4A, 4B), wobei die Abgänge paarweise einander gegenüberliegen und zwei gegenüberliegende Abgänge (A, B), die senkrecht zu einem Sammelschienensatz (10) verlaufende Schaltfelder bilden, für jegliche Stromphase über ein einziges Modul (1) elektrisch verbunden sind, wenn die Trenn- (3A, 3B, 3C) und Endabschalteinrichtungen (4A, 4B) des Moduls geschlossen sind, wobei die Endabschalteinrichtungen jeweils mit einem Abgang (A, B) verbunden sind, wobei jede Endabschalteinrichtung in einem Gehäuse (2) eines Moduls (1) für jegliche Stromphase aus einem Endtrennschalter (4A, 4B) besteht, der in eine Leitungsüberquerung (5A, 5B) mündet, die elektrisch mit einem Abgang (A, B) der Anlage verbunden ist, und wobei die Endtrennschalter (4A, 4B) in Reihe mit zwei Trenneinrichtungen angeordnet sind, die aus zwei Leistungsschaltern (3A, 3B) bestehen, die über den Phasenleiter (6) in Reihe verbunden sind und ihrerseits auf beiden Seiten von einem oder zwei Zugangstrennschaltern (4M) angeordnet sind, die jeweils in eine Leitungsüberquerung (5M) münden, die elektrisch mit einer Sammelschiene (9) eines Sammelschienensatzes (10) verbunden ist, **dadurch gekennzeichnet, dass** die Endabschalteinrichtung (4A, 4B) an jedem der beiden Enden eines Moduls angeordnet ist, dass zwei gegenüberliegende Abgänge (A, B) fluchtend verlaufende Schaltfelder bilden und dass der bzw. jeder Zugangstrennschalter mit einer Abzweigung des Phasenleiters und mit der Leitungsüberquerung (5M) verbunden ist.

2. Mehrphasige Verteileranlage nach Anspruch 1, wobei ein einziges mehrphasiges Modul (1) zwei gegenüberliegende Abgänge (A, B) elektrisch verbindet.

3. Mehrphasige Verteileranlage nach Anspruch 1, bei der eine Anzahl n von Stromphasen geführt wird, wobei zwei gegenüberliegende Abgänge (A, B) über n einphasige Module (1) verbunden sind.

4. Anlage nach einem der Ansprüche 1 bis 3, wobei die Anlage zwei Sammelschienensätze (10) enthält und ein Trenn- und Schaltmodul (1) zwei Zugangstrennschalter (4M) enthält, die über den Phasenleiter (6) unmittelbar miteinander verbunden sind.

5. Anlage nach einem der Ansprüche 1 bis 3, wobei die Anlage zwei Sammelschienensätze (10) enthält und ein Trenn- und Schaltmodul (1) zwei Zugangstrennschalter (4M) enthält, die über einen Unterbrechungstrennschalter (4S) in Reihe mit dem Phasenleiter (6) miteinander verbunden sind.

6. Trenn- und Schaltmodul, das aus einem Metallgehäuse (2) besteht, das in einem lsoliergas für jegliche Stromphase einen ersten Leistungsschalter (3A) umschließt, der mit einem durch das Modul geleiteten Phasenleiter (6) verbunden ist, wobei jeder der beiden Endabschnitte (13, 14) des Moduls pro Phase einen Endtrennschalter (4A, 4B) enthält, der mit einer Leitungsüberquerung (5A, 5B) verbunden ist, wobei ein Zugangstrennschalter (4M) zwischen dem ersten Leistungsschalter (3A) und einem Endtrennschalter (4A, 4B) angeordnet ist, wobei ein zweiter Leistungsschalter (3B) in Reihe mit dem ersten Leistungsschalter (3A) angeordnet ist, so dass der Zugangstrennschalter (4M) zwischen dem ersten und dem zweiten Leistungsschalter (3A, 3B) liegt, wobei der Zugangstrennschalter (4M) einerseits mit einer Abzweigung dieses Phasenleiters (6) und andererseits mit einer Leitungsüberquerung (5M) verbunden ist, **dadurch gekennzeichnet, dass** die beiden Leistungsschalter (3A, 3B) über den Phasenleiter (6) unmittelbar miteinander verbunden sind.

7. Modul nach Anspruch 6, wobei das Gehäuse (2) für jegliche Stromphase einen zweiten Zugangstrennschalter umschließt, der zwischen dem ersten und dem zweiten Leistungsschalter (3A, 3B) liegt.

8. Modul nach Anspruch 7, wobei die beiden Zugangstrennschalter (4M) über den Phasenleiter (6) unmittelbar miteinander verbunden sind.

9. Modul nach einem der Ansprüche 6 bis 8, wobei zumindest ein Leistungsschalter bzw. Trennschalter in einem Fach angeordnet ist, das ihm in dem Gehäuse (2) des Moduls zu eigen ist, wobei das Fach in dichter Weise von den angrenzenden Fächern isoliert ist.

10. Modul nach einem der Ansprüche 6 bis 9, enthaltend zumindest einen Stromwandler (19), der zwischen einem Endtrennschalter (4A, 4B) und einer Leitungsüberquerung (5A, 5B) angeordnet ist.

## Claims

1. A "hybrid" high voltage multiphase distribution substation having a single or double sets of busbars including at least one air-insulated set of busbars (10), comprising feeders (A, B, C, D) for air-insulated lines (21, 22) placed in substantially parallel bays (11, 12) on either side of the set(s) of busbars (10) and including metal-clad breaking and switching modules (1) each formed by a metal enclosure (2), for any current phase passing through a module, breaking and disconnection systems connected to a phase conductor (6) in an insulating gas, an end disconnection system (4A, 4B), the feeders are opposite in facing pairs, and two opposite feeders (A, B) forming bays perpendicular to a set of busbars (10) are electrically interconnected for each current phase via a single module (1) when the breaking (3A, 3B, 3C) and end disconnection systems (4A, 4B) of said module are closed, said end disconnection systems each being connected to a feeder (A, B), each end disconnection system in an enclosure (2) of a module (1) consists, for any current phase, of an end disconnector (4A, 4B) leading to an overhead bushing (5A, 5B) electrically connected to a feeder (A, B) of the substation, and wherein said end disconnectors (4A, 4B) are disposed in series with two break systems consisting of two circuit breakers (3A, 3B) connected in series by the phase conductor (6) themselves disposed on either side of one or two incoming disconnectors (4M) each leading to an overhead bushing (5M) electrically connected to a busbar (9) of a set of busbars (10),
**characterized in that** the end disconnection system (4A, 4B) is disposed at each of the two ends of a module, two opposite feeders (A, B) form aligned bays and the or each incoming disconnector is connected to a branch of the phase conductor and to the overhead bushing (5M).

2. A multiphase distribution substation according to claim 1, wherein a single multiphase module (1) electrically connects two opposite feeders (A, B).

3. A multiphase distribution substation according to claim 1, conveying a number n of current phases, wherein two opposite feeders (A, B) are interconnected by n single-phase modules (1).

4. A substation according to any of claims 1 to 3, wherein the substation comprises two sets of busbars (10) and wherein a breaking and switching module (1) comprises two incoming disconnectors (4M) directly interconnected to each other by the phase conductor (6).

5. A substation according to any of claims 1 to 3, wherein the substation comprises two sets of busbars (10) and wherein a breaking and switching module (1) comprises two incoming disconnectors (4M) interconnected to each other by a separation disconnector (45) in series with the phase conductor (6).

6. A breaking and switching module formed by metal enclosure (2) containing an insulating gas, and for each current phase: a first circuit breaker (3A) connected to a phase conductor (6) passing through said module; each of the two ends (13, 14) of said module having an end disconnector (4A, 4B) per phase connected to an overhead bushing (5A, 5B); an incoming disconnector (4M) being located between the first circuit breaker (3A) and an end disconnector (4A, 4B), a second circuit breaker (3B) disposed in series with the first circuit breaker (3A) in such a manner that the incoming disconnector (4M) is situated between the first and second circuit breakers (3A, 38), the incoming disconnector (4M) is connected on the one hand to a branch of this phase conductor (6) and on the other hand to an overhead bushing (5M),
**characterized in that** the two circuit breakers (3A, 3B) are directly interconnected by the phase conductor (6).

7. A module according to claim 6, wherein the enclosure (2) contains for each current phase a second incoming disconnector disposed between the first and second circuit breakers (3A, 3B).

8. A module according to claim 7, wherein the two incoming disconnectors (4M) are directly interconnected by the phase conductor (6).

9. A module according to any one of claims 6 to 8, wherein at least one circuit breaker or disconnector is disposed in a compartment specific thereto inside the enclosure (2) of the module, said compartment being isolated in a leakproof manner from the adjecent compartments.

10. A module according to any of claims 6 to 9, comprising at least one current transformer (19) disposed between an end disconnector (4A, 4B) and an overhead bushing (5A, 5B).
